# EUROPEAN PATENT SPECIFICATION

(11) **EP 1 153 338 B1**
(45) Date of publication and mention of the grant of the patent: **23.10.2002**
(21) Application number: 00905065.9
(22) Date of filing: 15.02.2000
(51) Int. Cl.: G05B 19/042, G05B 19/418, H04L 12/28

(54) **YARN PROCESSING SYSTEM AND METHOD TO OPERATE A YARN PROCESSING SYSTEM**
GARNBEHANDLUNGSSYSTEM UND VERFAHREN ZUM BETREIBEN EINES GARNBEHANDLUNGSSYSTEMS
SYSTEME DE TRAITEMENT DE FIL ET SON PROCEDE D'UTILISATION

(30) Priority: 15.02.1999 SE 9900510
(43) Date of publication of application: 14.11.2001
(73) Proprietor: IROPA AG, 6340 Baar (CH)
(72) Inventor: HELLSTRÖM, Jerker, S-440 41 Nol (SE); RUNDBERG, Tomas, S-434 94 Vallda (SE); THOLANDER, Lars, Helge, Gottfrid, S-310 42 Haverdal (SE)
(74) Representative: Grünecker, Kinkeldey, Stockmair & Schwanhäusser Anwaltssozietät
(86) International application number: PCT/EP00/01230
(87) International publication number: WO 00/049474

(56) References cited:
- EP-A- 0 458 874
- WO-A-92/03881
- WO-A-96/12993
- WO-A-98/50833
- GB-A- 2 322 262

## Description

The invention relates to a yam processing system according to the preamble part of claim 1 and to a method of operating a yam processing system according to the preamble of claim 8.

Already known computerised yam processing systems as a weaving machine with its associated feeding and accessory components are equipped with a complex multi-line wiring for transmitting signals between interconnected operation elements and associated to control and/or monitoring means. Said wiring extends between all components of the component group of the yam processing system.

Each of EP-A-0 458 874 and WO 92/03881 A discloses a method and structural means for controlling and/or monitoring a yam processing system with the help of a two-line field bus for the transmission of messages in the form of a quick communication protocol with information types differing in their respective priorities in order to achieve real-time transmission at least for highest priority information using the same field bus as lower priority information types. The wiring thus can be simplified by the two-line field bus and due to the communication protocol of special communication microprocessors at the interfaces with the field bus. However, in order to connect all transmission participants to the field bus the field bus has to be integrated in the crowded environment of the yam processing system at locations where mounting space and access are severely restricted. The field bus is vulnerable to damages. The entire system has to have a complicated layout configuration. Damages to the field bus easily cause breakdowns of the communication microprocessors.

WO 98/50833 discloses an automated residence management system using radio frequency communication between sub-systems and appliances remotely located in a plurality of residences and other spaces to operate in a centrally controlled manner, e.g. in private homes, apartment buildings, office buildings, and other occupied spaces and structures. Radio transmission takes place with a variable transmission/reception frequency such that the current and variable frequencies hop between two or more frequencies in synchronisation. A spread spectrum communication technique in the 900 MHz transmission range is recommended. Typical examples of such sub-systems are water heaters, lights, security systems, internal telephone wiring systems, gas meter, electric meter, water meter, hot tubes, clothes dryer, etc.

It is a task of the invention to provide a more reliable and flexible computerised yam processing system as well as a method to operate and control said yam processing system in a more reliable and flexible fashion.

Said task is achieved by the features as contained in claim 1 and the method according to the features contained in claim 8.

Radio transmissions within a frequency band as available for industrial applications and via wireless transmission paths avoid the necessity of designing a complicated field bus layout configuration. The transmission participants are communicating with each other by radio transmissions. This leads to a comfortable modular interchangeabilty of the transmission participants. In case of transmission failures or disturbances the danger of damages for other transmission participants is reduced. Each component or a component group can easily be pre-fabricated independently from others and by other manufacturers. The necessary compatibility is easy to be achieved and allows an advantageous modular composition of different yam processing systems based upon standardizable base components. In one and the same yam processing system a radio transmission system or several separate systems using a common frequency in the 2.4 GHz or 400 MHz band can be provided. Since in a radio transmission system all participants are able to listen to or output information without the restriction of a structural field bus as in prior art, particular care is necessary for the reliability of the respective information to be transmitted or received. This radio specific task is fulfilled by the radio media access control interface means responsible for the organisation and conversion of the information into the radio signals as well as the evaluation of the incoming radio signals. Modem radio transmitters/receivers for industrial applications with a reach of about 10 meters as well said radio media access control interface means are available for a fair price and with reliable operational behaviour and are easy to be integrated in existing electronic control and/or monitoring means. Even though said radio media access control interface means are constituting additional administrative overhead equipment in the system the most important advantage is the avoidance of a structural field bus wiring while still allowing to use the advantages of a quick and reliable communication protocol.

In a further embodiment even further active yam processing accessory components are integrated in the radio transmission system for control and/or monitoring purposes. A pre-requisite for said accessory components is an electronic control and/or monitoring means, a power supply, a communication microprocessor and the radio media access control interface means for its radio transmitter/receiver. Also in said accessory components of the yam processing system sensors, yam brakes, yarn clamps, tensiometers, yarn cutters, yam selectors, yam conveyers, etc. will receive or output radio transmitted data.

It is of advantage to use radio transmitters/receivers according to TDMA-standards i.e. a form of radio transmissions as used by GSM-mobile telephone systems. Alternatively radio transmitters/receivers can be used according to the CDMA-standards which is a more sophisticated form of radio transmissions with increased reliability and high disturbance safety level.

Said radio media access control interface means could be constituted by software only in said communication microprocessor or in an associated to microprocessor.

The communication microprocessor may be customised and apt to configure said different information types each with a frame having frame fields containing data. Said frame configuration is an ideal measure for quick and fail-safe serial or serial and digital transmission. By configuring said frames with at least one data frame field containing general prioritising data and/or individual addressing data a real-time transmission for important information can be achieved when necessary for a real-time control and/or monitoring of a yam processing system, or to transmit or receive information between particular selected participants in the transmission system only.

The high reliability and disturbance free radio transmission level in a yam processing system could advantageously be further extended by using a hand-held controller for transmission and/or receipt of information in a wireless fashion to or from selected or not selected participants in the transmission system. Expediently said hand-held controller is used to set operation parameters or readout stored information. It can easily be equipped such that it is compatible with several yam processing systems of similar or different kinds.

Participants in the transmission system are not only the yam feeding devices and the textile machine itself but advantageously yam sensor elements, drive means, drive operating means, tensiometers, yam brakes, threading equipment, parameter setting and storing elements, etc., all of which are prepared to output or respond to data transmitted by the respective radio transmitters/receivers.

The invention is explained with the help of the drawing. In the drawing is:
- Fig. 1: A schematic diagrammatic view of a yarn processing system, and
- Fig. 2: A schematic view of an essential part of a control and/or monitoring means as used in the yarn processing system of Fig. 1.

A yarn processing system S is constituted by a yarn consuming textile machine T, like a weaving machine (as shown) or a knitting machine (not shown), by at least one feeding device F, and, if needed, by several yam processing accessory components A, altogether forming a component group G designed and structured for mutual communication for controlling and/or monitoring the co-operation during operation of the components in the component group. Said communication is carried out by radio transmission on a wireless basis, preferably bi-directionally, and by using a quick communication protocol with information types differing in their relative ranking. This means that the information as transmitted has differing priorities with highest priority for information intended for real-time transmission, while lower ranking information types will have to wait to be transmitted when any higher ranking information is to be transmitted simultaneously. Highest priority information type are trig signals, stop signals, yarn breakage signals, sync signals, necessary for the correct co-operation of the components of the component group G. Operation parameters, continuous operation signals, preparatory acceleration or deceleration commands belong to lower priority information types.

Even though only one feeding device F is shown in the drawing, said yarn processing system S might contain a plurality of such feeding devices F of similar or different design, each prepared for processing a yarn Y intended for the yarn consuming textile machine T.

Feeding device F has a drive means 2 in a housing 1 supporting a yarn storage drum 2' and comprising yarn processing or monitoring components like yam sensors 3 or a yarn brake 4, e.g. at the outlet region of said feeding device F. Further not shown yarn processing accessory components could be provided at the inlet side (left-side) of feeding device F, as well. Said accessory components 3, 4 are connected to the power supply of the feeding device or to an own power supply and are also connected to a control and/or monitoring means C of said feeding device F. Said control and/or monitoring means C (an electronic control circuit having a microprocessor controlling the drive motor 2, e.g. on the basis of signals generated by components 3, 4 and independent from the yarn consumption as well as depending on information received from the textile machine T) contains a communication microprocessor B and at least one radio transmitter/receiver R (having a not shown antenna assembly).

Said communication microprocessor B is designed for a quick communication protocol and serial or serial and digital transmission of information types differing from another in ranking such that an information type having highest priority can be transmitted in real-time and has priority over other information types having lower priority. Said communication microprocessor B is apt to provide said information on the basis of signals or data present in the control and/or monitoring means C for said radio transmitter/receiver R, but simultaneously is apt to derive data or signals from any information as received via its associated radio transmitter/receiver R for the components connected to said control and/or monitoring means C.

Downstream yarn feeding device F as an accessory component A, e.g. a yarn tensioner, yarn brake, or tensiometer 5 is provided having e.g. an own power supply 6 and having an own control and/or monitoring means C, again equipped with a communication microprocessor B and a radio transmitter/receiver R.

Close to the inlet of a shed 10 of said textile machine T a further accessory component A is situated, namely a yarn cutting means, a yarn selector or an auxiliary insertion conveyor 7 having an own power supply or being connected to the power supply of the textile machine, and having an own control and/or monitoring means C containing a communication microprocessor B and a radio transmitter/receiver R.

In the entrance region of shed 10 of textile machine T a further component 8, e.g. a insertion means, is provided, preferably connected to the power supply of a control and/or monitoring means C of the textile machine T, equipped with communication microprocessor B and radio transmitter/receiver R. At the rear end of shed 10 a further accessory component 12 is situated, e.g. an arrival sensor, having an own power supply 6 and a control and/or monitoring means C, again equipped with a communication microprocessor B and a radio transmitter/receiver R. Power supply for processor B or radio transmitter/receiver R could be a battery instead.

Finally, in textile machine T a main control and/or monitoring means C is situated, e.g. close to the control and/or monitoring panel P of said textile machine T, to which panel P e.g. an only indicated drive means 9 of said textile machine T is connected. Also the main control and/or monitoring means C of textile machine T is equipped with at least one communication microprocessor B and an associated to, stationary radio receiver/transmitter R.

Furthermore, a hand-held controller H can be used as part of the yarn processing system S. Controller H has an indicating and input section 13, is designed on an electronic basis and contains a communication microprocessor B and a radio transmitter/receiver R and an own power supply, preferably a battery.

All radio transmitters/receivers R in the yam processing system S are designed for mutual wireless transmission within a frequency band as available for industrial applications. Advantageously they are designed for ISM-standards and a frequency band of about 2.4 GHz. Instead they could be designed for a frequency band of about 400 MHz. The radio transmitters/receivers R as used could operate according to TDMA-standards like GSM mobile telephone systems or according to CDMA-standard, a somewhat more sophisticated form of radio transmission.

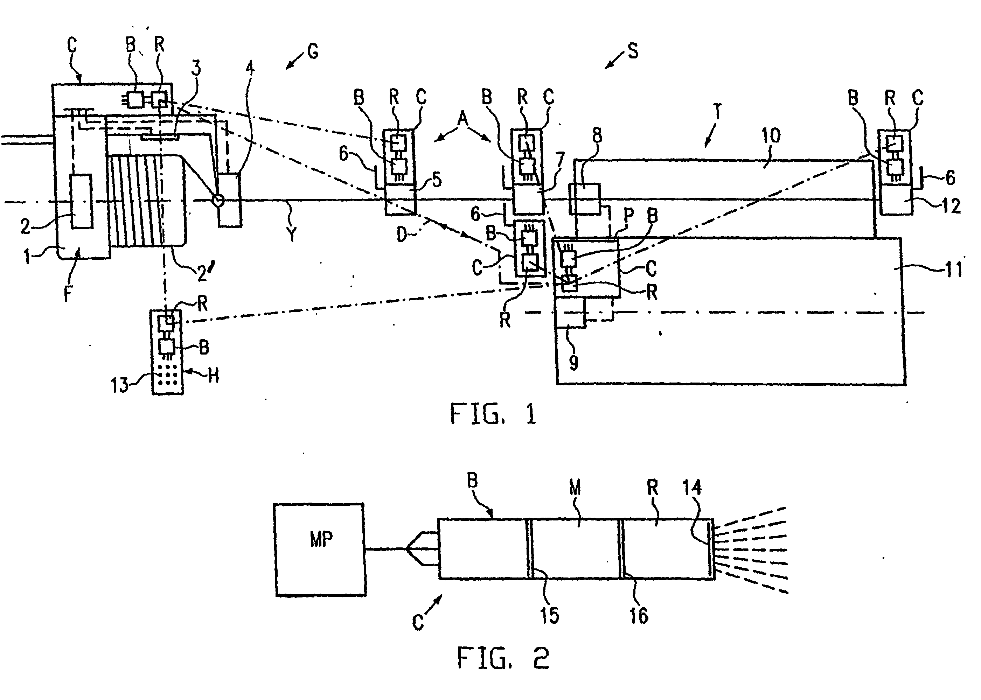

In Fig. 2 an essential part of each of the control and/or monitoring means C is shown. Within said control and/or monitoring means C a microprocessor M P is connected to a communication microprocessor B which in tum is connected to its radio receiver/transmitter R. Between communication microprocessor B and radio/transmitter R a radio media access control interface means M is situated, either in the form of hardware components or in the form of software constituted by communication microprocessor B itself or by an associated to, not shown, microprocessor. Radio transmitter/receiver R is equipped with an in-built antenna assembly 14. All the above-mentioned components can be mounted to a common circuit board.

Provided that data signals received from microprocessor MP are to be transmitted by radio receiver/transmitter R, they are organised by said communication microprocessor B in order to form a computer information of one of the above-mentioned different information types of the communication protocol. Since said information types cannot be transmitted by the radio transmitter/receiver R as they are, e.g. schematic indicated interfaces 15 and 16 are used, to first organise and handle the information as built up by communication microprocessor B for radio transmitter/receiver R and to translate via second interface 16 said organised or translated information into radio signals which then are transmitted by radio receiver/transmitter R, e.g. by frequency modulation (FM). Said radio media access control interface means M is an IC (integrated circuit) not only organising and handling the respective information for the radio transmitter R, but also organising and handling any radio transmitted received information back to communication microprocessor B which is then inputting the resulting signals or data into microprocessor MP. Radio media access control interface means M is an administrative overhead equipment of each control and/or monitoring means C and is necessary because all participants of the wireless radio transmission via transmission paths D simultaneously can be transmitting and/or receiving and thus need an administrative organisation within the transmission system, namely said radio media access control interface means M in each of the communicating control and/or monitoring means C.

## Claims

1. Yam processing system (S), consisting of a functionally interrelated component group including at least a yam consuming textile machine (T), particularly a weaving machine or a knitting machine, and at least one yam feeding device (F), each having electric drive means (2, 9) and electronic control and/or monitoring means (C), said yam processing system further including data transmission paths (D) for mutual data transmissions between said control and/or monitoring means of components of said component group (G), said control and/or monitoring devices each having at least one communication microprocessor (B) for providing information types In the form of a communication protocol, said information types differing in ranking with real time transmission priority for at least the information type of the highest ranking over lower ranking information types, **characterised in that** said communication microprocessor (B) in each control and/or monitoring device (C) is connected with a stationary radio transmitter/receiver (R) for carrying out said data transmission at a single common frequency via wireless transmission paths (D) within a frequency band of about 2.4 GHz or about 400 MHz available for industrial applications and with a reach in the range of about 10 metres, and that between said communication microprocessor (B) and said radio transmitter/receiver (R) a radio media access control interface means (M) is provided.

2. Yarn processing system as in claim 1, **characterised in that** said component group (G) includes at least one active yam processing accessory component (A) having an own electronic control and/or monitoring means (C) including a communication microprocessor (B), a radio media access control interface means (M) and a radio transmitter/receiver (R) and at least one data responsive and/or data generating element like a sensor (5) or a yam brake or yam clamp or a yam tensiometer or a yam cutter or a yam selector or a yam conveyor.

3. Yam processing system as in claim 1, **characterised by** a radio transmitter/receiver (R) according to TDMA-standards or COMA-standards.

4. Yam processing system as in claim 1, **characterised in that** said radio media access control interface means (M) is constituted by software in said communication microprocessor (B) or in another associated microprocessor.

5. Yam processing system as in claim 1, **characterised in that** each information type consists of data for wireless transmission and wireless receipt by each of said radio transmitter/receivers (R), said data being configured by said communication microprocessor (B) with a frame having data containing frame fields among which at least one frame field contains general prioritising data and/or individual addressing data for at least one of said control and/or monitoring devices (C).

6. Yam processing system as in claim 1, **characterised in that** at least one hand-held controller (H) forms part of said yam processing system (S) or a group of yam processing systems (F) and includes communication microprocessor (B), a radio media access control interface means (M) and a radio transmitter/receiver (R) for radio communication with at least one of the stationary radio transmitter/receivers (R).

7. A yam processing system as in claim 1, **characterised in that** to set control and/or monitoring means (C) in each feeding device (F) at least one onboard data responsive and/or data generating element is connected, like a yam sensor (3, 4) or element drive means (2) or a yam tensioner or a yam brake (4) or a threading equipment or an operation parameter setting and storing element.

8. Method for operating a yam processing system consisting of a yam consuming textile machine (T) like a weaving machine or a knitting machine and of a functionally associated component group (G) including at least one yam feeding device (F), each having electric drive means (2, 9) and electric control and/or monitoring means (C), said method comprising serial or serial and digital transmission of control and/or monitoring data within information of differing priorities and in the form of a communication protocol provided by communication microprocessors (B) in each of said control and/or monitoring means (C), **characterised in that** each information of one of the information types as provided by the communication microprocessor (B) is converted by a radio media access control interface means (M) into a radio message which is transmitted in the form of a wireless radio transmission at a single common frequency within a radio frequency band available for industrial applications of about 2.4 GHz or about 400 MHz and within a reach of about 10 metres by a radio transmitter/receiver (R) to at least another distant radio transmitter/receiver (R) and there is reconverted into a communication protocol information of said information type for the communication microprocessor of said receiving radio transmitter/receiver (R) via another radio media access control interface means (M).

## Patentansprüche

1. Fadenverarbeitendes System (S), bestehend aus einer Komponentengruppe umfassend zumindest eine fadenverbrauchende Textilmaschine (T), insbesondere eine Webmaschine oder eine Strickmaschine, und wenigstens einer Fadenliefervorrichtung (F), deren Komponenten miteinander in funktionaler Relation sind und deren jede elektrische Antriebsmittel (2, 9) und elektronische Steuer- und/oder Überwachungsmittel (C) hat, wobei das fadenverarbeitende System ferner Datenübertragungspfade (D) für gegenseitige Datenübertragungen zwischen den Steuer- und/oder Überwachungsmitteln von Komponenten der Komponentengruppe (G) umfasst, und jedes Steuer- und/oder Überwachungsmittel wenigstens einen Kommunikations-Mikroprozessor (B) hat zum Bereitstellen von Informationstypen in der Form eines Kommunikationsprotokolls, wobei diese Informationstypen sich in ihrem Rang voneinander unterscheiden mit einer Echtzeit-Transmissionspriorität für zumindest den Informationstyp des höchsten Ranges gegenüber Informationstypen mit niedrigerem Rang, **dadurch gekennzeichnet, dass** der Kommunikations-Mikroprozessor (B) in jeder Steuer- und/oder Überwachungsvorrichtung (C) verbunden ist mit einem stationären Radiosender/Empfänger (R) zum Ausführen der Datenübertragung bei einer einzigen gemeinsamen Frequenz über drahtlose Übertragungspfade (D) innerhalb eines Frequenzbandes von ca. 2,4 GHz oder ca. 400 MHz, wie für industrielle Anwendungen erhältlich, und mit einer Reichweite in dem Bereich von ca. 10 Metern, und dass zwischen dem Kommunikations-Mikroprozessor (B) und dem Radiosender/Empfänger (R) ein Radio-Medien-Zugangs-Steuer-Schnittstellen-Mittel (M) vorgesehen ist.

2. Fadenverarbeitendes System nach Anspruch 1, **dadurch gekennzeichnet, dass** die Komponentengruppe (G) wenigstens eine aktive Fadenverarbeitungs-Zubehörkomponente (A) umfasst, die ein eigenes elektronisches Steuer- und/oder Überwachungsmittel (C) besitzt, einschließlich eines Kommunikations-Mikroprozessors (B), eines Radio-Medien-Zugangs-Steuer-Schnittstellen-Mittels (M) und eines Radiosenders/Empfängers (R) und wenigstens eines auf Daten ansprechenden und/oder datengenerierenden Elementes wie eines Sensors (5) oder einer Fadenbremse oder einer Fadenklemme oder eines Fadentensiometers oder eines Fadenabschneiders oder eines Fadenselektors oder eines Fadenförderers.

3. Fadenverarbeitendes System nach Anspruch 1, **gekennzeichnet durch** einen Radiosender/Empfänger (R) entsprechend TDMA-Standards oder CDMA-Standards.

4. Fadenverarbeitendes System nach Anspruch 1, **dadurch gekennzeichnet, dass** das Radio-Medien-Zugangs-Steuer-Schnittstellen-Mittel (M) in dem Kommunikations-Mikroprozessor (B) oder in einem anderen, zugeordneten Mikroprozessor durch Software konstituiert ist.

5. Fadenverarbeitendes System nach Anspruch 1, **dadurch gekennzeichnet, dass** jeder Informationstyp aus Daten besteht für eine drahtlose Übertragung und einen drahtlosen Empfang durch jeden der Radiosender/Empfänger (R), wobei die Daten durch den Kommunikations-Mikroprozessor (B) mit einem Rahmen konfiguriert sind, der datenenthaltende Rahmenfelder besitzt, unter welchen zumindest ein Rahmenfeld allgemeine Priorisierungsdaten und/oder individuelle Adressierungsdaten für zumindest eine der Steuer- und/oder Überwachungsvorrichtungen (C) enthält.

6. Fadenverarbeitendes System nach Anspruch 1, **dadurch gekennzeichnet, dass** zumindest ein Hand-Controller (H) Teil des fadenverarbeitenden Systems (S) oder einer Gruppe von fadenverarbeitenden Systemen (F) ist und einen Kommunikations-Mikroprozessor (B), ein Radio-Medien-Zugangs-Steuer-Schnittstellen-Mittel (M) und einen Radiosender/Empfänger (R) zur Radio-Kommunikation mit wenigstens einem der stationären Radiosender/Empfänger (R) umfasst.

7. Fadenverarbeitendes System nach Anspruch 1, **dadurch gekennzeichnet, dass** zumindest ein bordeigenes, auf Daten ansprechendes und/oder datengenerierendes Element wie ein Fadensensor (3, 4) oder Element-Antriebsmittel (2) oder ein Fadenspanner oder eine Fadenbremse (4) oder eine Einfädel-Ausstattung oder ein Operations-Parameter-Einstell- und -Speicherelement, in jeder Liefervorrichtung (F) mit dem Steuerund/oder Überwachungsmittel (C) verbunden ist.

8. Verfahren zum Betreiben eines fadenverarbeitenden Systems, das aus einer fadenverbrauchenden Textilmaschine (T) wie einer Webmaschine oder einer Strickmaschine und aus einer funktionell zugeordneten Komponentengruppe (G) besteht, welche zumindest eine Fadenliefervorrichtung (F) umfasst, von denen jede elektrische Antriebsmittel (2, 9) und elektrische Steuer- und/oder Überwachungsmittel (C) besitzt, wobei das Verfahren die serielle oder serielle und digitale Übertragung von Steuer- und/oder Überwachungsdaten mit Informationen unterschiedlicher Prioritäten und in der Form eines durch Kommunikations-Mikroprozessoren (B) in jedem der Steuer- und/oder Überwachungsmittel (C) bereitgestellten Kommunikationsprotokolls umfasst, **dadurch gekennzeichnet, dass** jede Information von einem der durch den Kommunikations-Mikroprozessor (B) bereitgestellten Informationstypen durch ein Radio-Medien-Zugangs-Steuer-Schnittstellen-Mittel (M) in eine Radionachricht umgewandelt wird, die in der Form einer drahtlosen Radioübertragung bei einer einzigen gemeinsamen Frequenz innerhalb eines für industrielle Anwendungen erhältlichen Radio-Frequenzbandes von ca. 2,4 GHz oder ca. 400 MHz und innerhalb einer Reichweite von ca. 10 Metern durch einen Radiosender/Empfänger (R) zu wenigstens einem anderen, entfernten Radiosender/Empfänger (R) übertragen und dort mittels eines anderen Radio-Medien-Zugangs-Steuer-Schnittstellen-Mittels (M) rückgewandelt wird in eine Kommunikations-Protokoll-Information des Informationstyps für den Kommunikations-Mikroprozessor des empfangenden Radiosenders/Empfängers (R).

## Revendications

1. Système de traitement de fil (S), constitué d'un groupe de composants fonctionnellement reliés incluant au moins une machine textile consommant du fil (T), en particulier une machine à tisser ou une machine à tricoter, et au moins un dispositif d'alimentation en fil (F), chacun ayant des moyens électriques d'entraînement (2, 9) et des moyens électriques de commande et/ou surveillance, ledit système de traitement de fil comportant de plus des trajets de transmission de données (D) pour des transmissions de données mutuelles entre lesdits moyens de commande et/ou de surveillance des composants dudit groupe de composants (G), lesdits dispositifs de commande et/ou surveillance ayant chacun au moins un microprocesseur de communication (B) pour fournir des types d'informations ayant la forme d'un protocole de communication, lesdits types d'informations ayant des classements différents avec priorité de transmission en temps réel pour au moins le type d'informations ayant le classement le plus élevé par rapport aux types d'informations de classement plus faible, **caractérisé en ce que** ledit microprocesseur de communication (B) de chaque dispositif de commande et/ou de surveillance (C) est relié à un émetteur/récepteur radio fixe (R) pour transporter les transmissions de données à une fréquence commune unique via des trajets de transmission sans fil (D) dans une bande de fréquences d'environ 2,4 GHz ou d'environ 400 MHz disponible pour des applications industrielles et avec une portée dans la plage d'environ 10 mètres, et **en ce qu'**entre ledit microprocesseur de communication (B) et ledit émetteur/récepteur radio (R) des moyens formant interface de commande d'accès à des supports radio (M) sont fournis.

2. Système de traitement de fil selon la revendication 1, **caractérisé en ce que** ledit groupe de composants (G) comporte au moins un composant accessoire de traitement de fil actif (A) ayant des moyens électroniques propres de commande et/ou surveillance (C) incluant un microprocesseur de communication (B), des moyens formant interface de commande d'accès à des supports radio (M) et un émetteur/récepteur radio (R) et au moins un élément générant une réponse à des données et/ou des données, analogue à un détecteur (5) ou un frein de fil ou un serre-fil ou un tensiomètre de fil ou un couteau de fil ou un sélecteur de fil ou un convoyeur de fil.

3. Système de traitement de fil selon la revendication 1, **caractérisé en ce qu'**il comporte un émetteur/récepteur radio (R) conforme aux normes TDMA ou CDMA.

4. Système de traitement de fil selon la revendication 1, **caractérisé en ce que** lesdits moyens formant interface de commande d'accès à des supports radio (M) sont constitués par un logiciel situé dans ledit microprocesseur de communication (B) ou dans un autre microprocesseur associé.

5. Système de traitement de fil selon la revendication 1, **caractérisé en ce que** chaque type d'informations est constitué de données destinées à être transmises sans fil et reçues sans fil par chacun desdits émetteurs/récepteurs radio (R), lesdites données étant configurées par ledit microprocesseur de communication (B) à l'aide d'une trame ayant des champs de trame contenant des données parmi lesquelles au moins un champ de trame contient des données de priorité générale et/ou des données d'adresse individuelle pour au moins un des dispositifs de commande et/ou surveillance (C).

6. Système de traitement de fil selon la revendication 1, **caractérisé en ce qu'**au moins une commande portable (H) forme une partie dudit système de traitement de fil (S) ou d'un groupe de systèmes de traitement de fil (F) et comporte un microprocesseur de communication (B), des moyens formant interface de commande d'accès à des supports radio (M) et un émetteur/récepteur radio (R) pour une communication radio avec au moins un des émetteurs/récepteurs radio fixes (R).

7. Système de traitement de fil selon la revendication 1, **caractérisé en ce que** pour fixer les moyens de commande et/ou de gestion (C) de chaque dispositif d'alimentation (F) au moins un élément embarqué créant une réponse en données et/ou des données est relié, tel qu'un détecteur de fil (3, 4) ou des moyens d'entraînement d'élément (2) ou un dispositif de mise sous tension de fil ou un frein de fil (4) ou un équipement d'enfilage ou un élément de réglage et de mémorisation de paramètres de fonctionnement.

8. Procédé pour actionner un système de traitement de fil constitué d'une machine textile consommant du fil (T), analogue à une machine à tisser ou à une machine à tricoter, et d'un groupe de composants fonctionnellement associés (G), comportant au moins un dispositif d'alimentation en fil (F), chacun ayant des moyens électriques d'entraînement (2, 9) et des moyens électriques de commande et/ou surveillance (C), ledit procédé comportant la transmission série ou série et numérique de données de commande et/ou surveillance dans des informations ayant des priorités différentes et sous la forme d'un protocole de communication fourni par des microprocesseurs de communication (B) situés dans chacun desdits moyens de commande et/ou surveillance (C), **caractérisé en ce que** chaque information d'un des types d'informations tels que fournis par le microprocesseur de communication (B) est convertie par des moyens formant interface de commande d'accès à des supports radio (M) dans un message radio qui est transmis sous la forme d'une transmission radio sans fil à une fréquence commune unique dans une bande de fréquences radio disponible pour les applications indnstrielles d'environ 2,4 GHz ou d'environ 400 MHz et dans une portée d'environ 10 mètres par un émetteur/récepteur radio (R) vers au moins un autre émetteur/récepteur radio distant (R) et y est reconvertie en une information dans un protocole de communication dudit type d'informations pour le microprocesseur de communication dudit émetteur/récepteur radio recevant (R) via d'autres moyens formant interface de commande d'accès à des supports radio (M).
